# EUROPEAN PATENT SPECIFICATION

(11) **EP 3 663 682 B1**
(45) Date of publication and mention of the grant of the patent: **07.10.2026**
(21) Application number: 18842366.9
(22) Date of filing: 02.08.2018
(51) Int. Cl.: F25B 49/02, F25B 13/00

(54) **CONTROL METHOD FOR HEAT PUMP SYSTEM AND HEAT PUMP SYSTEM**
STEUERUNGSVERFAHREN FÜR EIN WÄRMEPUMPENSYSTEM UND WÄRMEPUMPENSYSTEM
PROCÉDÉ DE COMMANDE POUR SYSTÈME DE POMPE À CHALEUR ET SYSTÈME DE POMPE À CHALEUR

(30) Priority: 03.08.2017 CN 201710654735
(43) Date of publication of application: 10.06.2020
(73) Proprietor: Gree Electric Appliances (Wuhan) Co., Ltd., Hubei 430056 (CN); Gree Electric Appliances, Inc. of Zhuhai, Zhuhai, Guangdong 519070 (CN)
(72) Inventor: ZHONG, Hailing, Zhuhai Guangdong 519070 (CN); CHENG, Qi, Zhuhai Guangdong 519070 (CN); HUANG, Kailiang, Zhuhai Guangdong 519070 (CN); LIU, Yang, Zhuhai Guangdong 519070 (CN); LIU, Siyuan, Zhuhai Guangdong 519070 (CN); LI, Min, Zhuhai Guangdong 519070 (CN); WANG, Puzhong, Zhuhai Guangdong 519070 (CN)
(74) Representative: V.O.
(86) International application number: PCT/CN2018/098221
(87) International publication number: WO 2019/024881

(56) References cited:
- WO-A1-2013/065233
- CN-A- 1 318 723
- CN-A- 103 388 945
- CN-A- 103 968 494
- CN-A- 104 676 997
- CN-A- 104 896 809
- CN-A- 106 440 558
- CN-A- 107 388 663
- JP-A- 2017 083 143
- JP-B2- 6 147 173
- KR-A- 20080 001 308

## Description

### Technical Field

The invention relates to the field of automatic control of a heat pump system, in particular to a control method of a heat pump system.

### Background

When an air conditioning system starts heating, especially at a low ambient temperature, the low pressure of the air conditioning system is relatively low, so it is easy for a compressor to suffer from low-pressure protection caused by insufficient refrigerant gas supply at an suction port when the air conditioning system starts. In addition, when the air conditioning system starts heating, a four-way valve is reversed, which causes a large amount of refrigerant to pour into the compressor, and causes liquid entrainment of the compressor.

In addition, a patent document with publication number EP2495079A1 discloses: a three-way valve (switching device) (42) is provided between an intake tube of a compressor (6) and a four-way valve (8), making possible a switch between a tube (25) draining refrigerant directly from the four-way valve (8) into the intake tube of the compressor (6) and a tube (38) draining refrigerant from the four-way valve (8) into the intake tube of the compressor (6) through an alternate heat exchanger (heat storage tank (32), heat storage exchanger (34), heat storage material (36)) for refrigerant heating; and by controlling the three-way valve (switching device) (42) during defrosting operation, refrigerant flowing to an indoor heat exchanger (first heat exchanger) (16) and an outdoor heat exchanger (second heat exchanger) (14) flows to the alternate heat exchanger (heat storage tank (32), heat storage exchanger (34), heat storage material (36)) via the four-way valve (8), and is guided to the intake tube of the compressor (6).

CN103968494A discloses a control method of a heat pump system, wherein prior to switching a four-way valve, the current system pressure difference is detected and if the current system pressure difference is greater than a reversing pressure difference, the compressor frequency is reduced to reduce the pressure difference.

### Summary

In view of this, one of the objects of the disclosure is to provide a control method of a heat pump system which can improve operating reliability of the heat pump system, and a heat pump system.

To achieve the above object, according to an aspect, the present invention provides a control method of a heat pump system according to independent claim 1.

The heat pump system includes a throttling element and a four-way valve, and the four-way valve has a first state in a case that the heat pump system operates for refrigerating and a second state in a case that the heat pump system operates for heating. The control method includes that:
before the four-way valve is switched from the first state to the second state, a reversing pressure difference A of the four-way valve is compared with a current system pressure difference B calculated by a system high pressure and a system low pressure of the heat pump system to obtain a comparison result; and,
switching of a state of the four-way valve is controlled and an opening degree of the throttling element is adjusted according to the comparison result, or switching of a state of the four-way valve is controlled according to the comparison result, or an opening degree of the throttling element is adjusted according to the comparison result.

According to the invention, the control method further includes that: in a case that the reversing pressure difference A is less than the current system pressure difference B, the state of the four-way valve is not switched, and the opening degree of the throttling element is increased; and
in a case that the reversing pressure difference A is greater than or equal to the current system pressure difference B, the four-way valve is switched from the first state to the second state.

Optionally, the opening degree of the throttling element is increased to an opening degree D, and the opening degree D is 30% to 80%.

According to the invention, the after the four-way valve is switched from the first state to the second state, the opening degree of the throttling element is reduced.

Optionally, the opening degree of the throttling element is reduced to an opening degree E, and the opening degree E is 30% to 80%.

Optionally, the opening degree D is greater than the opening degree E.

According to the invention, after the opening degree of the throttling element is reduced and maintained for a first predetermined time period, a current actual superheat degree x of the heat pump system is compared with a target value C of a suction superheat degree to control the opening degree of the throttling element.

Optionally, in a case that the actual superheat degree x and the target value C of the suction superheat degree satisfy: x-C≤a first threshold XX, the opening degree of the throttling element is reduced; or
in a case that the actual superheat degree x and the target value C of suction superheat degree satisfy: the first threshold XX<x-C<a second threshold XS, the opening degree of the throttling element is kept unchanged; or
in a case that the actual superheat degree x and the target value C of suction superheat degree satisfy: x-C≥the second threshold XS, the opening degree of the throttling element is increased.

Optionally, the method further includes at least one of the following:
the first predetermined time period is 30s to 60s; and
the first threshold XX is 1°C to 4°C; and
the second threshold XS is 5°C to 10°C.

Optionally, in a case that the actual superheat degree x and the target value C of suction superheat degree constantly satisfy in a second predetermined time period: x-C≤the first threshold XX, the opening degree of the throttling element is reduced, or else, the opening degree of the throttling element is kept unchanged; or
in a case that the actual superheat degree x and the target value C of suction superheat degree constantly satisfy in a third predetermined time period: x-C≥the second threshold XS, the opening degree of the throttling element is increased, or else, the opening degree of the throttling element is kept unchanged.

Optionally, the method further includes at least one of the following:
the second predetermined time period is 30s to 60s; and
the third predetermined time period is 30s to 60s.

Optionally, reducing the opening degree of the throttling element comprises: the throttling element is reduced at intervals of a fourth predetermined time period, a step of reducing each time being a first step EXV1 and increasing the opening degree of the throttling element comprises: the throttling element is increased at intervals of a fifth predetermined time period, a step of increasing each time being a second step EXV2; or
reducing the opening degree of the throttling element comprises: the throttling element is reduced at intervals of a fourth predetermined time period, a step of reducing each time being a first step EXV1; or
increasing the opening degree of the throttling element comprises: the throttling element is increased at intervals of a fifth predetermined time period, a step of increasing each time being a second step EXV2.

Optionally, the method further includes at least one of the following:
the fourth predetermined time period is 30s to 60s; and
the fifth predetermined time period is 30s to 60s; and
the first step EXV1 is 0.1 % to 1%,; and
the second step EXV2 is 0.1 % to 1 %.

Optionally, the control method is applied to starting heating of the heat pump system in a low-temperature environment.

Optionally, temperature of the low-temperature environment is lower than -5°C.

Optionally, the throttling element is an electronic expansion valve.

According to another aspect, the disclosure adopts the following technical solution.

A heat pump system is provided, which includes the throttling element and the four-way valve, and is controlled by any one of the above control methods.

According to the control method of the heat pump system, in a case that the four-way valve needs to be reversed, according to the reversing pressure difference of the four-way valve and the current system high and low pressure difference of the heat pump system, the four-way valve and the throttling element are controlled, and therefore problems of low-pressure protection caused by reversing the four-way valve, liquid entrainment of the compressor and the like can be effectively solved, and operating reliability of the heat pump system can be improved.

### Brief Description of the Drawings

By means of the description for embodiments of the disclosure with reference to the accompanying drawings, the above and other objects, features and advantages of the disclosure will become more apparent. In the accompanying drawings:
Fig. 1 shows a structure diagram of a heat pump system not according to the invention; and
Fig. 2 shows a flowchart of a control method according to some specific embodiments of the disclosure.

The above accompanying drawings include the following reference numbers: 1. compressor; 2. oil separator; 3. four-way valve; 4. fin type heat exchanger; 5a. first check valve; 5b. second check valve; 5c. third check valve; 5d. fourth check valve; 6a. first ball valve; 6b. second ball valve; 7. dry filter; 8. electronic expansion valve; 9.flooded shell and tube exchanger; 10. gas-liquid separator; 11. spray pipeline; 12. oil return pipeline; 13. high pressure sensor; 14. low pressure sensor; 15. suction temperature sensor.

### Detailed Description of the Embodiments

The disclosure is described below based on the embodiments. Those of ordinary skill in the art should understand that the drawings are provided for the purpose of illustration, and the drawings are not necessarily to scale.

Unless explicitly required by the context, similar words "including", "comprising", and the like in the whole specification and claims should be interpreted as inclusive meanings rather than exclusive or exhaustive meaning, that is, meanings of "including but not limited to".

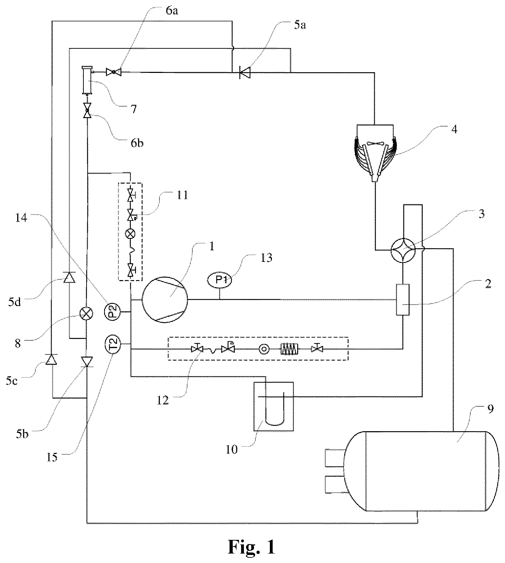

The disclosure provides a control method of a heat pump system. The heat pump system includes a throttling element. The throttling element can be, but is not limited to, an electronic expansion valve (EEV). Certainly, the control method is also applied to other throttling elements capable of throttling. A control method for the throttling element of the disclosure is described below in detail by taking a flooded heat pump air-cooled screw unit for example. Certainly, it is understandable that the control method is also applied to other heat pump systems having the similar problems. As shown in Fig. 1, the flooded heat pump air-cooled screw unit includes a compressor 1, a four-way valve 3, a fin type heat exchanger 4, an electronic expansion valve 8 and a flooded shell and tube exchanger 9, an oil separator 2 is arranged at an exhaust port of the compressor 1, and oil separated from the oil separator 2 flows into an air suction port of the compressor 1 through an oil return pipeline 12, a gas-liquid separator 10 is arranged at an air suction port of the compressor 1, a first check valve 5a, a first ball valve 6a, a dry filter 7 and a second ball valve 6b are arranged on a connection pipeline between the electronic expansion valve 8 and the fin type heat exchanger 4. The air suction port of the compressor 1 is also connected to a pipeline between the electronic expansion valve 8 and the second ball valve 6b through a spray pipeline 11, a second check valve 5b is arranged on a connection pipeline between the electronic expansion valve 8 and the flooded shell and tube exchanger 9. The flooded heat pump air-cooled screw unit further includes two branch pipelines, one end of one of the two branch pipelines is connected to a pipeline between the second check valve 5b and the flooded shell and tube exchanger 9, and the other end is connected to a connection pipeline between the first check valve 5a and the first ball valve 6a, a third check valve 5c is arranged on the one of the two branch pipelines; one end of the other of the two branch pipelines is connected to a connection pipeline between the second check valve 5b and the electronic expansion valve 8, and the other end is connected to a connection pipeline between the first check valve 5a and the fin type heat exchanger 4. A fourth check valve 5d is arranged on the other of the two branch pipelines. In a case that the flooded heat pump air-cooled screw unit operates for refrigerating, a flow direction of refrigerant is: the compressor 1-the oil separator 2-the four-way valve 3-the fin type heat exchanger 4-the first check valve 5a-the first ball valve 6a-dry filter 7-the second ball valve 6b-the electronic expansion valve 8-the second check valve 5b-the flooded shell and tube exchanger 9-the four-way valve 3-the gas-liquid separator 10-the compressor 1. In a case that the flooded heat pump air-cooled screw unit operates for heating, the flow direction of the refrigerant is: the compressor 1-the oil separator 2-the four-way valve 3-the flooded shell and tube exchanger 9-the third check valve 5c-the first ball valve 6a-the dry filter 7-the second ball valve 6b-the electronic expansion valve 8-the fourth check valve 5d-the fin type heat exchanger 4-the four-way valve 3-the gas-liquid separator 10-the compressor 1. Generally, the four-way valve 3 acts according to whether a solenoid valve carried by the four-way valve 3 is powered, in the case that the flooded heat pump air-cooled screw unit operates for heating, the solenoid valve carried by the four-way valve 3 is powered after a reversing pressure difference of the four-way valve 3 is satisfied, and the four-way valve 3 is reversed; In the case that the flooded heat pump air-cooled screw unit operates for refrigerating, the solenoid valve carried by the four-way valve 3 is not powered, and the four-way valve 3 is not powered. A suction temperature sensor 15 and a low pressure sensor 14 are arranged on a suction pipe of the compressor 1, which are configured to respectively detect a suction temperature and a suction pressure (namely a low pressure) of the compressor 1. A high pressure sensor 13 is arranged on an exhaust pipe, which is configured to detect an exhaust pressure (namely a high pressure) of the compressor 1.

A control method of the electronic expansion valve is that: before the four-way valve 3 is switched to a second state (namely a powered state) where the unit operates for heating from a first state (namely a non-powered state) where the unit operates for refrigerating (for example, in a case that the unit starts heating, especially starts heating in a low-temperature environment, for example, the low temperature here is limited to -5°C), a reversing pressure difference A of the four-way valve 3 is compared with a current system pressure difference B calculated by a system high pressure and a system low pressure of the unit, and switching of a state of the four-way valve 3 is controlled according to a comparison result and the opening degree of the electronic expansion valve 8 is adjusted according to the comparison result, or switching of a state of the four-way valve 3 is controlled according to a comparison result, or the opening degree of the electronic expansion valve 8 is adjusted according to a comparison result. The reversing pressure difference A is the intrinsic parameter of the four-way valve 3, and the reversing pressure differences of different four-way valves 3 are different. The current system pressure difference B of the unit is obtained according to a formula: B=high pressure-low pressure, and the high pressure is detected by the high pressure sensor 13, and the low pressure is detected by the low pressure sensor 14.

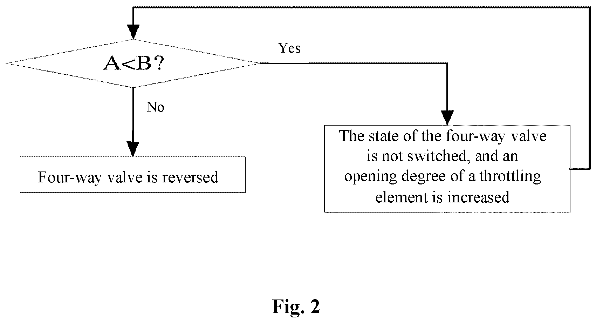

Specifically, as shown in Fig. 2, the control method includes the following steps.

At S001, it is judged whether the reversing pressure difference A is less than the current system pressure difference B; if the reversing pressure difference A is less than the current system pressure difference B, S002 is performed; or else, S003 is performed.

At S002, the state of the four-way valve 3 is not switched, and the opening degree of the electronic expansion valve 8 is increased; then, go back to the S001.

At S003, the four-way valve 3 is reserved.

In the case that the reversing pressure difference A is less than the current system pressure difference B, if the four-way valve 3 is reserved in this case, low-pressure protection will be caused by insufficient refrigerant gas supply at the suction port of the compressor 1, so, the opening degree of the electronic expansion valve 8 is increased to increase the refrigerant flux in the system, so as to meet an refrigerant gas supply demand of the compressor 1, the four-way valve 3 is reversed until the reversing pressure difference A is greater than or equal to the current system pressure difference B. In some embodiments, the opening degree of the electronic expansion valve 8 is increased to an opening degree D, and the opening degree D is 30% to 80%.

In some embodiments, because a large amount of refrigerant is stored in the flooded shell and tube exchanger 9, after the four-way valve 3 is reversed, the flooded shell and tube exchanger 9 changes from a low pressure side to a high pressure side, and if the electronic expansion valve 8 keeps the opening degree at startup unchanged, it is easy to cause liquid entrainment during suction of the compressor 1. At this point, the opening degree of the electronic expansion valve 8 is reduced, in some embodiments, the opening degree of the electronic expansion valve 8 is reduced to an opening degree E. The opening degree E is 30% to 80%, and the opening degree D and the opening degree E satisfy that D is greater than E.

In some other embodiments, when the opening degree of the electronic expansion valve 8 is reduced to the opening degree E, timing is started. After a first predetermined time period, the opening degree of the electronic expansion valve 8 is adjusted according to the following control method, to match the requirement of the unit for the refrigerant:
in a case that the actual superheat degree x and the target value C of suction superheat degree satisfy: x-C≤a first threshold XX, the opening degree of the electronic expansion valve 8 is reduced; or
in a case that the actual superheat degree x and the target value C of suction superheat degree satisfy: the first threshold XX<x-C<a second threshold XS, the opening degree of the electronic expansion valve 8 is kept unchanged; or
in a case that the actual superheat degree x and the target value C of suction superheat degree satisfy: x-C≥ the second threshold XS, the opening degree of the electronic expansion valve 8 is increased.

The target value C of suction superheat degree is the intrinsic parameter of the system. The actual superheat degree x can be obtained according to the formula: actual superheat degree x=suction temperature-saturation temperature corresponding to suction pressure, and the suction temperature is detected by the suction temperature sensor 15, and the saturation temperature corresponding to suction pressure is detected by the low pressure sensor 14.

In some other embodiments, in order to avoid faulty operations on the electronic expansion valve 8 caused by interference factors, and further ensure system stability, in a case that the actual superheat degree x and the target value C of suction superheat degree constantly satisfy in a second predetermined time period: x-C≤XX, the opening degree of the electronic expansion valve 8 is reduced; or else, the opening degree of the electronic expansion valve 8 is kept unchanged; and in a case the actual superheat degree x and the target value C of suction superheat degree constantly satisfy in a third predetermined time period: x-C≥XS, the opening degree of the electronic expansion valve 8 is increased; or else, the opening degree of the electronic expansion valve 8 is kept unchanged.

The first threshold XX, the second threshold XS, the first predetermined time period, the second predetermined time period and the third predetermined time period can be set according to a specific system. For example, the first threshold XX is 1°C to 4°C, the second threshold XS is 5°C to 10°C, the first predetermined time period is 30s to 60s, the second predetermined time period is 30s to 60s, and the third predetermined time period is 30s to 60s.

In some other embodiments, reducing the opening degree of the electronic expansion valve 8 comprises: the electronic expansion valve 8 is reduced at intervals of a fourth predetermined time period, a step of reducing each time being a first step EXV1, until the actual superheat degree x and the target value C of suction superheat degree satisfy: the first threshold XX<x-C<the second threshold XS.

Increasing the opening degree of the electronic expansion valve 8 comprises: the electronic expansion valve 8 is increased at intervals of a fifth predetermined time period, a step of increasing each time being a second step EXV2, until the actual superheat degree x and the target value C of suction superheat degree satisfy: the first threshold XX<x-C<the second threshold XS.

The fourth predetermined time period and the fifth predetermined time period can be set according to a specific system. For example, the fourth predetermined time period is 30s to 60s, and the fifth predetermined time period is 30s to 60s.

The first step EXV1 and the second step EXV2 can be fixed values and can be set according to a specific system. For example, the first step EXV1 is 0.1 % to 1 %, and the second step EXV2 is 0.1% to 1%. In some other embodiments, in order to further improve the accuracy of control, the first step EXV1 is determined according to a ratio between the actual superheat degree x and the target value C of suction superheat degree or a difference value between the actual superheat degree x and the target value C of suction superheat degree; the greater the difference between the actual superheat degree x and the target value C of suction superheat degree, the greater the first step EXV1; the smaller the difference between the actual superheat degree x and the target value C of suction superheat degree, the smaller the first step EXV1. Similarly, the second step EXV2 is determined according to the ratio between the actual superheat degree x and the target value C of suction superheat degree or the difference value between the actual superheat degree x and the target value C of suction superheat degree; the greater the difference between the actual superheat degree x and the target value C of suction superheat degree, the greater the second step EXV2; and the smaller the difference between the actual superheat degree x and the target value C of suction superheat degree, the smaller the second step EXV2.

In some other embodiments, an opening degree adjusting range of the electronic expansion valve 8 is set as 10% to 100%. The impact caused by performing faulty operation to the electronic expansion valve 8 due to system exception is reduced by setting a lower limit value of the opening degree of the electronic expansion valve 8, thereby further improving the system stability.

Furthermore, the disclosure also provides a heat pump system. The throttling element is controlled by any one of the above control methods, thereby ensuring the operating reliability of the heat pump system.

## Claims

1. A control method of a heat pump system, the heat pump system comprising a throttling element and a four-way valve (3), and the four-way valve (3) having a first state in a case that the heat pump system operates for refrigerating and a second state in a case that the heat pump system operates for heating; wherein the control method comprises:
before the four-way valve (3) is switched from the first state to the second state, comparing a reversing pressure difference A of the four-way valve (3) with a current system pressure difference B calculated by a system high pressure and a system low pressure of the heat pump system to obtain a comparison result; and
controlling switching of a state of the four-way valve (3) and adjusting an opening degree of the throttling element according to the comparison result, or controlling switching of a state of the four-way valve (3) according to the comparison result, or adjusting an opening degree of the throttling element according to the comparison result,
further comprising:
in a case that the reversing pressure difference A is less than the current system pressure difference B, prohibiting switching the state of the four-way valve (3), and increasing the opening degree of the throttling element; and
in a case that the reversing pressure difference A is greater than or equal to the current system pressure difference B, switching the four-way valve (3) from the first state to the second state,
wherein after switching the four-way valve (3) from the first state to the second state, the opening degree of the throttling element is reduced,
wherein after reducing the opening degree of the throttling element and maintaining for a first predetermined time period, a current actual superheat degree x of the heat pump system is compared with a target value C of a suction superheat degree to control the opening degree of the throttling element.

2. The control method as claimed in claim 1, wherein the opening degree of the throttling element is increased to an opening degree D, the opening degree D being 30% to 80%.

3. The control method as claimed in claim 1, wherein the opening degree of the throttling element is reduced to an opening degree E, the opening degree E being 30% to 80%, wherein the opening degree D is greater than the opening degree E.

4. The control method as claimed in claim 1, wherein in a case that the actual superheat degree x and the target value C of the suction superheat degree satisfy: x-C≤a first threshold XX, the opening degree of the throttling element is reduced; or
in a case that the actual superheat degree x and the target value C of the suction superheat degree satisfy: the first threshold XX<x-C<a second threshold XS, the opening degree of the throttling element is kept unchanged; or
in a case that the actual superheat degree x and the target value C of the suction superheat degree satisfy: x-C≥the second threshold XS, the opening degree of the throttling element is increased.

5. The control method as claimed in claim 5, further comprising at least one of the following:
the first predetermined time period is 30s to 60s;
the first threshold XX is 1°C to 4°C; and
the second threshold XS is 5°C to 10°C.

6. The control method as claimed in claim 4, wherein in a case that the actual superheat degree x and the target value C of the suction superheat degree constantly satisfy: x-C≤the first threshold XX in a second predetermined time period, the opening degree of the throttling element is reduced, or else, the opening degree of the throttling element is kept unchanged; or
in a case that the actual superheat degree x and the target value C of the suction superheat degree constantly satisfy: x-C≥the second threshold XS in a third predetermined time period, the opening degree of the throttling element is increased, or else, the opening degree of the throttling element is kept unchanged.

7. The control method as claimed in claim 6, further comprising at least one of the following:
the second predetermined time period is 30s to 60s; and
the third predetermined time period is 30s to 60s.

8. The control method as claimed in claim 4, wherein reducing the opening degree of the throttling element comprises: reducing the throttling element at intervals of a fourth predetermined time period, a step of reducing each time being a first step EXV1, and increasing the opening degree of the throttling element comprises: increasing the throttling element at intervals of a fifth predetermined time period, a step of increasing each time being a second step EXV2; or
reducing the opening degree of the throttling element comprises: reducing the throttling element at intervals of a fourth predetermined time period, a step of reducing each time being a first step EXV1;or
increasing the opening degree of the throttling element comprises: increasing the throttling element at intervals of a fifth predetermined time period, a step of increasing each time being a second step EXV2.

9. The control method as claimed in claim 8, further comprising at least one of the following:
the fourth predetermined time period is 30s to 60s;
the fifth predetermined time period is 30s to 60s;
the first step EXV1 is 0.1% to 1%; and
the second step EXV2 is 0.1 % to 1 %.

10. The control method as claimed in any one of claims 1 to 9, wherein the control method is applied to starting heating of the heat pump system in a low-temperature environment.

11. The control method as claimed in claim 10, wherein temperature of the low-temperature environment is lower than -5°C.

## Patentansprüche

1. Steuerverfahren für ein Wärmepumpensystem, wobei das Wärmepumpensystem ein Drosselelement und ein Vierwegeventil (3) umfasst und das Vierwegeventil (3) einen ersten Zustand aufweist, wenn das Wärmepumpensystem zum Kühlen betrieben wird, und einen zweiten Zustand aufweist, wenn das Wärmepumpensystem zum Heizen betrieben wird; wobei das Steuerverfahren umfasst:
vor dem Umschalten des Vierwegeventils (3) von dem ersten Zustand in den zweiten Zustand, Vergleichen einer Umkehrdruckdifferenz A des Vierwegeventils (3) mit einer aktuellen Systemdruckdifferenz B, die anhand eines Systemhochdrucks und eines Systemniederdrucks des Wärmepumpensystems berechnet wird um ein Vergleichsergebnis zu erhalten; und
Steuern des Umschaltens eines Zustands des Vierwegeventils (3) und Einstellen eines Öffnungsgrads des Drosselelements gemäß dem Vergleichsergebnis, oder Steuern des Umschaltens eines Zustands des Vierwegeventils (3) gemäß dem Vergleichsergebnis, oder Einstellen eines Öffnungsgrads des Drosselelements gemäß dem Vergleichsergebnis,
ferner umfassend:
wenn die Umkehrdruckdifferenz A kleiner als die aktuelle Systemdruckdifferenz B ist, Verhindern des Umschaltens des Zustands des Vierwegeventils (3), und Erhöhen des Öffnungsgrads des Drosselelements; und
wenn die Umkehrdruckdifferenz A größer als oder gleich der aktuellen Systemdruckdifferenz B ist, Umschalten des Vierwegeventils (3) von dem ersten Zustand in den zweiten Zustand,
wobei nach dem Umschalten des Vierwegeventils (3) von dem ersten Zustand in den zweiten Zustand der Öffnungsgrad des Drosselelements verringert wird,
wobei nach dem Verringern des Öffnungsgrads des Drosselelements und dem Aufrechterhalten für eine erste vorbestimmte Zeitdauer, ein aktueller tatsächlicher Überhitzungsgrad x des Wärmepumpensystems mit einem Zielwert C eines Ansaugüberhitzungsgrads verglichen wird um den Öffnungsgrad des Drosselelements zu steuern.

2. Steuerverfahren nach Anspruch 1, wobei der Öffnungsgrad des Drosselelements auf einen Öffnungsgrad D erhöht wird, wobei der Öffnungsgrad D 30 % bis 80 % beträgt.

3. Steuerverfahren nach Anspruch 1, wobei der Öffnungsgrad des Drosselelements auf einen Öffnungsgrad E verringert wird, wobei der Öffnungsgrad E 30 % bis 80 % beträgt, wobei der Öffnungsgrad D größer als der Öffnungsgrad E ist.

4. Steuerverfahren nach Anspruch 1, wobei, wenn der tatsächliche Überhitzungsgrad x und der Zielwert C des Ansaugüberhitzungsgrads die Bedingung x-C≤einen ersten Schwellenwert XX erfüllen, der Öffnungsgrad des Drosselelements verringert wird; oder
wenn der tatsächliche Überhitzungsgrad x und der Zielwert C des Ansaugüberhitzungsgrads die Bedingung erster Schwellenwert XX<x-C<ein zweiter Schwellenwert XS erfüllen, der Öffnungsgrad des Drosselelements unverändert gehalten wird; oder
wenn der tatsächliche Überhitzungsgrad x und der Zielwert C des Ansaugüberhitzungsgrads die Bedingung x-C≥den zweiten Schwellenwert XS erfüllen, der Öffnungsgrad des Drosselelements erhöht wird.

5. Steuerverfahren nach Anspruch 5, ferner umfassend mindestens eines der Folgenden:
die erste vorbestimmte Zeitdauer beträgt 30s bis 60s;
der erste Schwellenwert XX beträgt 1°C bis 4°C; und
der zweite Schwellenwert XS beträgt 5°C bis 10°C.

6. Steuerverfahren nach Anspruch 4, wobei, wenn der tatsächliche Überhitzungsgrad x und der Zielwert C des Ansaugüberhitzungsgrads während einer zweiten vorbestimmten Zeitdauer kontinuierlich die Bedingung x-C≤den ersten Schwellenwert XX erfüllen, der Öffnungsgrad des Drosselelements verringert wird, oder andernfalls, der Öffnungsgrad des Drosselelements unverändert gehalten wird; oder
wenn der tatsächliche Überhitzungsgrad x und der Zielwert C des Ansaugüberhitzungsgrads während einer dritten vorbestimmten Zeitdauer ständig die Bedingung x-C≥den zweiten Schwellenwert XS erfüllen, der Öffnungsgrad des Drosselelements erhöht wird, oder andernfalls, der Öffnungsgrad des Drosselelements unverändert gehalten wird.

7. Steuerverfahren nach Anspruch 6, ferner umfassend mindestens eines der Folgenden:
die zweite vorbestimmte Zeitdauer beträgt 30s bis 60s; und
die dritte vorbestimmte Zeitdauer beträgt 30s bis 60s.

8. Steuerverfahren nach Anspruch 4, wobei das Verringern des Öffnungsgrads des Drosselelements umfasst: Verringern des Drosselelements in Intervallen einer vierten vorbestimmten Zeitdauer, ein Schritt des jeweiligen Verringerns ein erster Schritt EXV1 ist, und das Erhöhen des Öffnungsgrads des Drosselelements umfasst: Erhöhen des Drosselelements in Intervallen einer fünften vorbestimmten Zeitdauer, wobei ein Schritt des jeweiligen Erhöhens ein zweiter Schritt EXV2 ist; oder
das Verringern des Öffnungsgrads des Drosselelements umfasst: Verringern des Drosselelements in Intervallen einer vierten vorbestimmten Zeitdauer, wobei ein Schritt des jeweiligen Verringerns ein erster Schritt EXV1 ist; oder
das Erhöhen des Öffnungsgrads des Drosselelements umfasst: Erhöhen des Drosselelements in Intervallen einer fünften vorbestimmten Zeitdauer, wobei ein Schritt des jeweiligen Erhöhens ein zweiter Schritt EXV2 ist.

9. Steuerverfahren nach Anspruch 8, ferner umfassend mindestens eines der Folgenden:
die vierte vorbestimmte Zeitdauer beträgt 30s bis 60s;
die fünfte vorbestimmte Zeitdauer beträgt 30s bis 60s;
der erste Schritt EXV1 beträgt 0,1% bis 1%; und
der zweite Schritt EXV2 beträgt 0,1% bis 1%.

10. Steuerverfahren nach einem der Ansprüche 1 bis 9, wobei das Steuerverfahren auf das Starten des Heizens des Wärmepumpensystems in einer Niedertemperaturumgebung angewendet wird.

11. Steuerverfahren nach Anspruch 10, wobei die Temperatur der Niedertemperaturumgebung niedriger als -5°C ist.

## Revendications

1. Procédé de commande d'un système de pompe à chaleur, le système de pompe à chaleur comprenant un élément d'étranglement et une soupape à quatre voies (3), et la soupape à quatre voies (3) ayant un premier état lorsque le système de pompe à chaleur fonctionne pour une réfrigération et un deuxième état lorsque le système de pompe à chaleur fonctionne pour un chauffage ; dans lequel le procédé de commande comprend les étapes suivantes :
avant que la soupape à quatre voies (3) ne commute du premier état au deuxième état, comparer une différence de pression d'inversion A de la soupape à quatre voies (3) avec une différence de pression de système en cours B calculée par une pression de système élevée et une pression de système basse du système de pompe à chaleur afin d'obtenir un résultat de comparaison ; et
commander la commutation d'un état de la soupape à quatre voies (3) et régler un degré d'ouverture de l'élément d'étranglement selon le résultat de comparaison, ou commander la commutation d'un état de la soupape à quatre voies (3) selon le résultat de comparaison, ou régler un degré d'ouverture de l'élément d'étranglement selon le résultat de comparaison,
comprenant en outre les étapes suivantes :
lorsque la différence de pression d'inversion A est inférieure à la différence de pression de système en cours B, empêcher la commutation de l'état de la soupape à quatre voies (3) et augmenter le degré d'ouverture de l'élément d'étranglement ; et
lorsque la différence de pression d'inversion A est supérieure ou égale à la différence de pression de système en cours B, commuter la soupape à quatre voies (3) du premier état au deuxième état,
dans lequel, après avoir commuté la soupape à quatre voies (3) du premier état au deuxième état, le degré d'ouverture de l'élément d'étranglement est réduit,
dans lequel, après avoir réduit le degré d'ouverture de l'élément d'étranglement et l'avoir maintenu pendant une première période de temps prédéterminée, un degré de surchauffe réel x en cours du système de pompe à chaleur est comparé avec une valeur de consigne C d'un degré de surchauffe à l'aspiration pour commander le degré d'ouverture de l'élément d'étranglement.

2. Procédé de commande selon la revendication 1, dans lequel le degré d'ouverture de l'élément d'étranglement est augmenté jusqu'à un degré d'ouverture D, le degré d'ouverture D allant de 30 % à 80 %.

3. Procédé de commande selon la revendication 1, dans lequel le degré d'ouverture de l'élément d'étranglement est réduit à un degré d'ouverture E, le degré d'ouverture E allant de 30 % à 80 %, dans lequel le degré d'ouverture D est supérieur au degré d'ouverture E.

4. Procédé de commande selon la revendication 1, dans lequel, lorsque le degré de surchauffe réel x et la valeur de consigne C du degré de surchauffe à l'aspiration satisfont à la condition : *x* - *C ≤ un premier seuil XX,* le degré d'ouverture de l'élément d'étranglement est réduit ; ou
lorsque le degré de surchauffe réel x et la valeur de consigne C du degré de surchauffe à l'aspiration satisfont à la condition : *le premier seuil XX < x - C < un deuxième seuil XS,* le degré d'ouverture de l'élément d'étranglement est maintenu inchangé ; ou
lorsque le degré de surchauffe réel x et la valeur de consigne C du degré de surchauffe à l'aspiration satisfont à la condition : *x - C ≥ le deuxième seuil XS,* le degré d'ouverture de l'élément d'étranglement est augmenté.

5. Procédé de commande selon la revendication 5, comprenant en outre au moins l'un des cas suivants :
la première période de temps prédéterminée se situe entre 30 s et 60 s ;
le premier seuil XX se situe entre 1 °C et 4 °C ; et
le deuxième seuil XS se situe entre 5 °C et 10 °C,

6. Procédé de commande selon la revendication 4, dans lequel, lorsque le degré de surchauffe réel x et la valeur de consigne C du degré de surchauffe à l'aspiration satisfont en permanence à la condition : *x - C ≤ le premier seuil XX* dans une deuxième période de temps prédéterminée, le degré d'ouverture de l'élément d'étranglement est réduit, sinon le degré d'ouverture de l'élément d'étranglement est maintenu inchangé ; ou
lorsque le degré de surchauffe réel x et la valeur de consigne C du degré de surchauffe à l'aspiration satisfont en permanence à la condition : *x - C ≥ le deuxième seuil XS* dans une troisième période de temps prédéterminée, le degré d'ouverture de l'élément d'étranglement est augmenté, sinon le degré d'ouverture de l'élément d'étranglement est maintenu inchangé.

7. Procédé de commande selon la revendication 6, comprenant en outre au moins l'un des cas suivants :
la deuxième période de temps prédéterminée se situe entre 30 s et 60 s ; et
la troisième période de temps prédéterminée se situe entre 30 s et 60 s.

8. Procédé de commande selon la revendication 4, dans lequel la réduction du degré d'ouverture de l'élément d'étranglement comprend : la réduction de l'élément d'étranglement à des intervalles d'une quatrième période de temps prédéterminée, chaque étape de réduction étant une première étape EXV1, et l'augmentation du degré d'ouverture de l'élément d'étranglement comprend : l'augmentation de l'élément d'étranglement à des intervalles d'une cinquième période de temps prédéterminée, chaque étape d'augmentation étant une deuxième étape EXV2 ; ou
la réduction du degré d'ouverture de l'élément d'étranglement comprend : la réduction de l'élément d'étranglement à des intervalles d'une quatrième période de temps prédéterminée, chaque étape de réduction étant une première étape EXV1 ; ou
l'augmentation du degré d'ouverture de l'élément d'étranglement comprend : l'augmentation de l'élément d'étranglement à des intervalles d'une cinquième période de temps prédéterminée, chaque étape d'augmentation étant une deuxième étape EXV2.

9. Procédé de commande selon la revendication 8, comprenant en outre au moins l'un des cas suivants :
la quatrième période de temps prédéterminée se situe entre 30 s et 60 s ;
la cinquième période de temps prédéterminée se situe entre 30 s et 60 s ;
la première étape EXV1 se situe entre 0,1 % et 1 % ; et
la deuxième étape EXV2 se situe entre 0,1 % et 1 %.

10. Procédé de commande selon l'une quelconque des revendications 1 à 9, dans lequel le procédé de commande est appliqué au démarrage du chauffage du système de pompe à chaleur dans un environnement à basse température.

11. Procédé de commande selon la revendication 10, dans lequel la température de l'environnement à basse température est inférieure à - 5 °C.
